# EUROPEAN PATENT APPLICATION

(11) **EP 4 456 198 A1**
(43) Date of publication of application: **30.10.2024**
(21) Application number: 22911117.4
(22) Date of filing: 16.12.2022
(51) Int. Cl.: H01M 4/58, C01B 25/45, H01M 4/136, H01M 4/62, H01M 10/054

(54) **POSITIVE ELECTRODE ACTIVE MATERIAL FOR SODIUM-ION SECONDARY CELL**

(30) Priority: 24.12.2021 JP 2021210810
(71) Applicant: Nippon Electric Glass Co., Ltd., Otsu-shi, Shiga 520-8639 (JP)
(72) Inventor: TSUNODA, Kei, Otsu-shi Shiga 520-8639 (JP); YAMAUCHI, Hideo, Otsu-shi Shiga 520-8639 (JP)
(74) Representative: Tetzner, Michael
(86) International application number: PCT/JP2022/046397
(87) International publication number: WO 2023/120414

(57) **Abstract**

Provided is a novel positive-electrode active material for a sodium-ion secondary battery having an excellent discharge capacity. A positive-electrode active material for a sodium-ion secondary battery is made of a crystallized glass containing crystals represented by a general formula Naₓ(Ni_{1-a-b}MₐM'_{b})_{y}P₂O_{z} (where M and M' are transition metal elements different from each other and each at least one transition metal element selected from the group consisting of Co, Mn, Cr, Fe, and Ti, and 0.6 ≤ x ≤ 4, 0.3 ≤ y ≤ 2.7, 6 ≤ z ≤ 7.5, 0 < a ≤ 0.9, and 0 < b ≤ 0.9 are satisfied).

## Description

### [Technical Field]

The present invention relates to positive-electrode active materials for sodium-ion batteries for use in portable electronic devices, electric vehicles, and so on.

### [Background Art]

Lithium-ion secondary batteries have secured their place as high-capacity and light-weight power sources essential for portable electronic terminals, electric vehicles, and so on and attention has been focused, as their positive-electrode active materials, on active materials containing olivine crystals represented by a general formula LiFePO₄ (see, for example, Patent Literature 1) . However, as for lithium, there are concerns about such issues as global rise in raw and processed material costs and, therefore, studies have recently been conducted on sodium-ion secondary batteries in which sodium is used as an alternative to lithium (see, for example, Non-Patent Literature 1) .

A conventional positive-electrode active material containing crystals represented by Na₂FeP₂O₇ has a problem of low voltage and poor energy density. To cope with this, a positive-electrode active material has been proposed which contains Ni as a transition metal for the purpose of increasing the voltage (see, for example, Patent Literature 2).

### [Citation List]

### [Patent Literature]

[PTL 1]
   JP-A-H05-205741
[PTL 2]
   WO 2017/073457

### [Non-Patent Literature]

[NPL 1]
Journal of the Ceramic Society of Japan 120 [8] 344-346 2012

### [Summary of Invention]

### [Technical Problem]

Use of a positive-electrode active material containing Ni as a transition metal enables increase in voltage, but makes the valence change of Ni elements accompanying charge and discharge partially irreversible, which arises a problem of poor discharge capacity.

In view of the foregoing, the present invention has an object of providing a novel positive-electrode active material for a sodium-ion secondary battery having an excellent discharge capacity.

### [Solution to Problem]

The inventors have found from intensive studies that the above problem can be solved by a positive-electrode active material having a particular composition containing a Ni component and propose the positive-electrode active material as the present invention.
[1] Specifically, a positive-electrode active material for a sodium-ion secondary battery of the present invention has a feature of being made of a crystallized glass containing crystals represented by a general formula Naₓ(Ni_{1-a-b}MₐM'_{b})_{y}P₂O_{z} (where M and M' are transition metal elements different from each other and each at least one transition metal element selected from the group consisting of Co, Mn, Cr, Fe, and Ti, and 0.6 ≤ x ≤ 4, 0.3 ≤ y ≤ 2.7, 6 ≤ z ≤ 7.5, 0 < a ≤ 0.9, and 0 < b ≤ 0.9 are satisfied).

Since Ni and other two or more kinds of transition metals are contained together as transition metals, the valence change of Ni elements accompanying charge and discharge is stabilized, which reduces the irreversible capacity and enables provision of a positive-electrode active material having an excellent discharge capacity.

The positive-electrode active material for a sodium-ion secondary battery according to the present invention has a feature of being made of a crystallized glass. The crystallized glass contains not only a crystalline phase but also an amorphous phase and, therefore, the diffusion path for sodium ions three-dimensionally expands, which facilitates insertion and extraction of sodium ions accompanying charge and discharge and thus enables rapid charge and discharge. In addition, the charge and discharge capacities and the cycle characteristics are easy to increase. In further addition, when the positive-electrode active material is used as a positive-electrode active material for a solid-state sodium-ion secondary battery, the amorphous phase softens and flows during firing to fusion bond the positive-electrode active material and a sodium-ion conductive solid electrolyte together and, thus, a dense sintered body is easily formed. Therefore, an ion-conducting path is easily formed at the interface between the positive-electrode active material and the sodium-ion conductive solid electrolyte. The incorporation of amorphous in the positive-electrode active material also offers an advantage that the decomposition of electrolyte by the positive-electrode active material is more suppressible.

Herein, a crystallized glass means a glass obtained by heating (firing) a precursor glass containing an amorphous phase to precipitate crystals (crystallization). A single kind of crystal may be precipitated or two or more kinds of crystals may be precipitated. For example, whether or not to be a crystallized glass can be determined by a peak angle shown by powder X-ray diffraction (XRD).

[2] Apositive-electrode active material for a sodium-ion secondary battery of the present invention according to [1] described above, wherein M and M' are each preferably Co or Mn.

[3] A positive-electrode active material for a sodium-ion secondary battery of the present invention according to [1] or [2] described above and is preferably made of a crystallized glass containing crystals represented by a general formula Na₂Ni_{1-a-b}MₐM'_{b}P₂O₇ or a general formula Na_{1.82} (Ni_{1-a-b}MₐM'_{b})_{1.09}P₂O₇ (where M and M' each independently represent at least one transition metal element selected from the group consisting of Co, Mn, Cr, Fe, and Ti, and 0 < a ≤ 0.9 and 0 < b ≤ 0.9 are satisfied) .

[4] A positive-electrode active material for a sodium-ion secondary battery of the present invention according to any one of [1] to [3] described above, wherein the crystals preferably have a structure belonging to a triclinic space group P1 or P-1.

[5] A positive-electrode active material for a sodium-ion secondary battery of the present invention according to any one of [1] to [4] described above, wherein the crystallized glass preferably contains, in terms of % by mole of the following oxides, 8 to 55% Na₂O, 1 to 70% NiO, over 0 to 60% CoO+MnO+CrO+FeO+TiO₂ (where at least two selected from among CoO, MnO, CrO, FeO, and TiO₂ are contained), and 15 to 70% P₂O₅.

[6] Apositive-electrode active material for a sodium-ion secondary battery of the present invention according to [5] described above and preferably contains, in terms of % by mole, 0 to 10% Al₂O₃+ZrO₂.

[7] A positive-elect rode active material for a sodium-ion secondary battery of the present invention according to [5] or [6] described above and preferably contains, in terms of % by mole, 0 to 10% F.

[8] A positive-electrode active material precursor glass for a sodium-ion secondary battery of the present invention has a feature of containing, in terms of % by mole of the following oxides, 8 to 55% Na₂O, 1 to 70% NiO, over 0 to 60% CoO+MnO+CrO+FeO+TiO₂ (where at least two selected from among CoO, MnO, CrO, FeO, and TiO₂ are contained), and 15 to 70% P₂O₅.

[9] An electrode for a sodium-ion secondary battery of the present invention preferably contains the positive-electrode active material for a sodium-ion secondary battery according to any one of [1] to [7] described above, a solid electrolyte, and a conductive agent.

[10] An electrode for a sodium-ion secondary battery of the present invention according to [9] described above, wherein the solid electrolyte is preferably a beta-alumina-based solid electrolyte.

[11] An electrode for a sodium-ion secondary battery of the present invention according to [9] described above, wherein the solid electrolyte is preferably a NASICON-type solid electrolyte containing at least one of a first compound represented by a general formula Na₁₊ₓZr₂P₃₋ₓSiₓO₁₂ (where 0 ≤ x ≤ 3) and a second compound in which a part of Zr in the first compound is substituted with at least one element selected from the group consisting of Ca, Mg, Ba, Sr, Al, Sc, Y, In, Ti, and Ga.

[12] A sodium-ion secondary battery of the present invention has a feature of including the electrode for a sodium-ion secondary battery according to any one of [9] to [11] described above.

### [Advantageous Effects of Invention]

The present invention enables provision of a novel positive-electrode active material for a sodium-ion secondary battery having an excellent discharge capacity.

### [Description of Embodiments]

### (Positive-Electrode Active Material for Sodium-Ion Secondary Battery)

A positive-electrode active material for a sodium-ion secondary battery according to the present invention has a feature of being made of a crystallized glass containing crystals represented by a general formula Naₓ(N1_{1-a-b}MₐM'_{b})_{y}P₂O_{z} (where M and M' are transition metal elements different from each other and each at least one transition metal element selected from the group consisting of Co, Mn, Cr, Fe, and Ti, and 0.6 ≤ x ≤ 4, 0.3 ≤ y ≤ 2.7, 6 ≤ z ≤ 7.5, 0 < a ≤ 0.9, and 0 < b ≤ 0.9 are satisfied). Hereinafter, a description will be given of the reasons why the respective contents of components constituting the crystals are limited as just described and respective preferred ranges of contents of the components.

The index x is within a range of 0.6 ≤ x ≤ 4, preferably within a range of 1 ≤ x ≤ 3.5, more preferably within a range of 1.2 ≤ x ≤ 2.5, even more preferably within a range of 1.35 ≤ x ≤ 2.4, still even more preferably within a range of 1.5 ≤ x ≤ 2.3, yet still even more preferably within a range of 1.6 ≤ x ≤ 2.1, and particularly preferably within a range of 1.7 ≤ x ≤ 2.1. If x is too small, the number of sodium ions contributing to absorption and release is small and, therefore, the discharge capacity tends to decrease. On the other hand, if x is too large, heterogenous crystals, such as Na₃PO₄, not contributing to charge and discharge precipitate and, therefore, the discharge capacity tends to decrease.

The index y is within a range of 0.3 ≤ y ≤ 2.7, preferably within a range of 0.65 ≤ y ≤ 2.4, more preferably within a range of 0.7 ≤ y ≤ 2.1, even more preferably within a range of 0.8 ≤ y ≤ 1.8, still even more preferably within a range of 0.8 ≤ y ≤ 1.7, and particularly preferably within a range of 0.9 ≤ y ≤ 1.6. If y is too small, the number of transition metal elements for making a redox reaction is small, the number of sodium ions contributing to absorption and release thus becomes small, and, therefore, the discharge capacity tends to decrease. On the other hand, if y is too large, heterogenous crystals, such as NiO, MnO, and FeO, not contributing to charge and discharge precipitate and, therefore, the discharge capacity tends to decrease.

The index z is within a range of 6 ≤ z ≤ 7.5, preferably within a range of 6.4 ≤ z ≤ 7.5, and particularly preferably within a range of 6.8 ≤ z ≤ 7.5. If z is too small, the valences of the transition metal elements become lower than bivalence and, thus, the transition metal elements precipitate as metals with charge and discharge, which may adversely affect the battery characteristics. In addition, if z is too small, the number of sodium ions to be released is small and a redox reaction caused by transition metals is less likely to occur, which tends to decrease the discharge capacity. On the other hand, if z is too large, the valences of the transition metal elements become higher than bivalence, a redox reaction accompanying charge and discharge is thus less likely to occur, and the number of sodium ions to be absorbed and released becomes small, which makes it likely that the discharge capacity decreases. The element P has a role as an element for forming a backbone of a crystal structure as a network forming component.

The transition metal elements M and M' are different from each other and each at least one selected from the group consisting of Co, Mn, Cr, Fe, and Ti, among which Co and Mn are preferred because they exhibit particularly high redox potentials.

The index a is 0 < a ≤ 0.9, preferably 0.01 ≤ a ≤ 0.6, more preferably 0.02 ≤ a ≤ 0.3, and particularly preferably 0.05 ≤ a ≤ 0.2. The index b is 0 < b ≤ 0.9, preferably 0.01 ≤ b ≤ 0.6, more preferably 0.02 ≤ b ≤ 0.3, and particularly preferably 0.05 ≤ b ≤ 0.2. If the index a or b is too small or too large, the discharge capacity is likely to decrease. The value a+b (the total of a and b) is preferably 0 < a+b ≤ 0.9, more preferably 0.01 ≤ a+b ≤ 0.6, even more preferably 0.02 ≤ a+b ≤ 0.3, and particularly preferably 0.05 ≤ a+b ≤ 0.2.

Al or Zr may be present in the form of a solid solution as a component of the crystal. By doing so, the crystal structure can be stabilized. Furthermore, part of O elements may be substituted with F. By doing so, the voltage can be increased and the energy density can be increased.

Examples of the crystals represented by the general formula Naₓ(Ni_{1-a-b}MₐM'_{b})_{y}P₂O_{z} include crystals represented by a general formula Na₂Ni_{1-a-b}MₐM'_{b}P₂O₇, crystals represented by a general formula Na_{1.82}(Ni_{1-a-b}MₐM'_{b})_{1.09}P₂O₇, and crystals represented by a general formula Na₂(Ni_{1-a-b}MₐM'_{b})_{1.33}P₂O_{7.33} (where M and M' each independently represent at least one transition metal element selected from the group consisting of Co, Mn, Cr, Fe, and Ti, and 0 < a ≤ 0.9 and 0 < b ≤ 0.9 are satisfied) . Among them, crystals represented by the general formula Na₂ (Ni_{1-a-b}MₐM'_{b})_{1.33}P₂O_{7.33} are preferred because they have a large capacity. The crystals represented by the general formula Naₓ(Ni_{1-a-b}MₐM'_{b})_{y}P₂O_{z} preferably have a structure belonging to a triclinic space group P1 or P-1.

As the crystallite size of the crystals is smaller, the average particle diameter of the positive-electrode active material particles can be made smaller and, thus, the electrical conductivity can be more increased. Specifically, the crystallite size is preferably 100 nm or less and particularly preferably 80 nm or less. The lower limit of the crystallite size is not particularly limited but is, actually, preferably not less than 1 nm and more preferably not less than 10 nm. The crystallite size can be determined from analysis results of powder X-ray diffraction of the crystals according to the Scherrer equation.

The crystallized glass forming the positive-electrode active material for a sodium-ion secondary battery according to the present invention has a feature of containing, in terms of % by mole of oxides, 8 to 55% Na₂O, 1 to 70% NiO, over 0 to 60% CoO+MnO+CrO+FeO+TiO₂ (where at least two selected from among CoO, MnO, CrO, FeO, and TiO₂ are contained), and 15 to 70% P₂O₅. The reasons why the components are limited as just described will be described below. Note that in the following description of the content of each of the components "%" refers to "% by mole" unless otherwise stated.

Na₂O serves, during charge and discharge, as a supply source of sodium ions that move between the positive-electrode active material and a negative-electrode active material. The content of Na₂O is 8 to 55%, preferably 15 to 45%, and particularly preferably 25 to 35%. If Na₂O is too little, the amount of sodium ions contributing to absorption and release is small and, therefore, the discharge capacity tends to decrease. On the other hand, if Na₂O is too much, heterogeneous crystals not contributing to charge and discharge, such as Na₃PO₄, are likely to precipitate and, therefore, the discharge capacity tends to decrease.

NiO changes the valence of Ni ions during charge and discharge to cause a redox reaction and thus acts as a drive force for absorption and release of sodium ions. The content of NiO is 1 to 70%, preferably 10 to 65%, more preferably 15 to 60%, even more preferably 20 to 55%, still even more preferably 23 to 50%, yet still more preferably 25 to 40%, and particularly preferably 26 to 36%. If NiO is too little, a redox reaction accompanying charge and discharge is less likely to occur and, therefore, the amount of sodium ions to be absorbed and released becomes small, which tends to decrease the discharge capacity. On the other hand, if NiO is too much, heterogeneous crystals tend to precipitate to decrease the discharge capacity.

CoO, MnO, CrO, FeO, and TiO₂ are components that stabilize the valence change of Ni elements accompanying charge and discharge. This reduces the irreversible capacity of Ni elements and enables provision of a positive-electrode active material having an excellent discharge capacity. In addition, the cycle characteristics can be increased. These components, like NiO, change the valences of these transition metal element ions during charge and discharge to cause redox reactions and thus act as drive forces for absorption and release of sodium ions. Among them, CoO and MnO are preferred because they exhibit particularly high redox potentials. The content of CoO+MnO+CrO+FeO+TiO₂ is over 0 to 60%, preferably 0.1 to 50%, more preferably 0.5 to 45%, even more preferably 1 to 40%, still even more preferably 3 to 30%, and particularly preferably 5 to 20%. If the content of CoO+MnO+CrO+FeO+TiO₂ is too small, the above effects are difficult to achieve. On the other hand, if the content of CoO+MnO+CrO+FeO+TiO₂ is too large, heterogeneous crystals not contributing to charge and discharge, such as FeO and MnO, are likely to precipitate and, therefore, the discharge capacity tends to decrease. Furthermore, the addition of these components can decrease the glass transition point and the crystallization temperature, which enables production of the crystallized glass at low temperature. Thus, the process cost can be reduced. In addition, when sintered together with a solid electrolyte, these components tend to suppress the reaction and suppress the precipitation of heterogeneous crystals. Herein, "x + y + ... " means the total content of components. Here, the crystallized glass need not necessarily contain the components as essential components and may not contain one or some of the components.

P₂O₅ forms a three-dimensional network and, therefore, has the effect of stabilizing the structure of the crystallized glass. In addition, P₂O₅ has the effect of increasing the ionic conductivity of the crystallized glass. The content of P₂O₅ is 15 to 70%, preferably 20 to 60%, and particularly preferably 25 to 45%. If the content of P₂O₅ is too small, the discharge capacity after repeated charge and discharge tends to decrease. On the other hand, if the content of P₂O₅ is too large, heterogeneous crystals not contributing to charge and discharge, such as P₂O₅, tend to precipitate.

The ratio Na₂O/ (NiO+CoO+MnO+CrO+FeO+TiO₂) is preferably 0.2 to 8, more preferably 0.3 to 6, even more preferably 0.3 to 4, and particularly preferably 0.4 to 3. If the ratio Na₂O/(NiO+CoO+MnO+CrO+FeO+TiO₂) is too small or too large, the discharge capacity tends to decrease. Furthermore, the ratio (NiO+CoO+MnO+CrO+FeO+TiO₂)/P₂O₅ is preferably 0.2 to 4, more preferably 0.3 to 3, and particularly preferably 0.4 to 2. If the ratio (NiO+CoO+MnO+CrO+FeO+TiO₂)/P₂O₅ is too small or too large, the discharge capacity tends to decrease. Herein, the ratio "Na₂O/(NiO+CoO+MnO+CrO+FeO+TiO₂)" means the molar ratio between the content of Na₂O and the content of transition metals (NiO+CoO+MnO+CrO+FeO+TiO₂) that cause a redox reaction. Furthermore, the ratio " (NiO+CoO+MnO+CrO+FeO+TiO₂) /P₂O₅" means the molar ratio between the content of (NiO+CoO+MnO+CrO+FeO+TiO₂) and the content of P₂O₅.

Al₂O₃ and ZrO₂ are components that stabilize the crystal structure. The contents of Al₂O₃ and ZrO₂ are each preferably 0 to 10% and particularly preferably 0.1 to 5%. If the content of Al₂O₃ or ZrO₂ is too large, heterogeneous crystals not contributing to charge and discharge, such as AlPO₄, tend to precipitate.

F is a component that increases the voltage of the positive-electrode active material to increase the energy density. The content of F is preferably 0 to 10% and particularly preferably 0.1 to 5%. If the content of F is too large, vitrification tends to be difficult.

In addition to the above components, various components may be contained in the positive-electrode active material without impairing the effects of the present invention, which facilitates vitrification. Examples of these components include, in terms of oxides, MgO, CaO, SrO, BaO, ZnO, CuO, GeO₂, Nb₂O₅, V₂O₅, and Sb₂O₅. The contents of these components is each preferably 0 to 30%, more preferably 0.1 to 20%, and particularly preferably 0.5 to 10%.

The positive-electrode active material according to the present invention may be coated or formed into a composite with an electrically conductive carbon. By doing so, the electronic conductivity is increased and, thus, the rapid charge/discharge characteristics are likely to increase. Examples of the electrically conductive carbon that can be used include highly electrically conductive carbon blacks, such as acetylene black and Ketjen black, powders of graphite and other types of carbons, and carbon fibers. Among them, acetylene black is preferred because of its high electronic conductivity.

An example of a method for coating the positive-electrode active material with an electrically conductive carbon is a method of mixing the positive-electrode active material with an organic compound which is a source of the electrically conductive carbon and then firing the mixture in an inert or reducing atmosphere to carbonize the organic compound. Any material may be used as the organic compound so far as it can remain as carbon in the process of heat treatment, but glucose, citric acid, ascorbic acid, phenolic resin, a surfactant or the like is preferably used, and a surfactant is particularly preferred because it is easily adsorbable on the surface of the positive-electrode active material. The surfactant may be any of a cationic surfactant, an anionic surfactant, an amphoteric surfactant, and a non-ionic surfactant, but a non-ionic surfactant is particularly preferred because of its excellent adsorbability on the surface of the positive-electrode active material.

The mixing ratio between the positive-electrode active material and the electrically conductive carbon is, in terms of mass ratio, preferably 80-99.5:0.5-20 and more preferably 85-98:2-15. If the content of the electrically conductive carbon is too small, the electronic conductivity tends to be poor. On the other hand, if the content of the electrically conductive carbon is too large, the content of the positive-electrode active material becomes relatively small and, therefore, the discharge capacity tends to decrease.

When the surface of the positive-electrode active material is coated with an electrically conductive carbon, the thickness of the electrically conductive carbon coating is preferably 1 to 100 nm and particularly preferably 5 to 80 nm. If the thickness of the electrically conductive carbon coating is too small, the electrically conductive carbon coating is likely to be lost in the process of charging/discharging to deteriorate the battery characteristics. On the other hand, if the thickness of the electrically conductive carbon coating is too large, ionic conduction is inhibited and, thus, a decrease in discharge capacity, a voltage drop, and so on are likely to occur.

The form of the positive-electrode active material is not particularly limited, but a powdered form is preferred because the number of sites for absorption and release of sodium ions is increased. In this case, its average particle diameter is preferably 0.05 to 20 µm, more preferably 0.1 to 10 µm, even more preferably 0.2 to 5 µm, and particularly preferably 0.2 to 2 µm. Furthermore, its maximum particle diameter is preferably 150 µm or less, more preferably 100 µm or less, even more preferably 75 µm or less, and particularly preferably 55 µm or less. If the average particle diameter or maximum particle diameter is too large, the number of sites for absorption and release of sodium ions during charge and discharge becomes small and, therefore, the discharge capacity tends to decrease. On the other hand, if the average particle diameter is too small, the dispersion state of powder when the positive-electrode active material is produced in paste form tends to be poor, which tends to make it difficult to produce a uniform electrode.

Herein, the average particle diameter and the maximum particle diameter refer to a median primary particle diameter D50 (diameter at 50% cumulative volume) and a median primary particle diameter D99 (diameter at 99% cumulative volume), respectively, and are values measured by a laser diffraction particle size distribution measurement device.

### (Method for Producing Positive-Electrode Active Material for Sodium-Ion Secondary Battery)

The positive-electrode active material for a sodium-ion secondary battery according to the present invention can be produced by a melt-quenching process as described below. First, powders of raw materials are formulated to give a desired composition, thus obtaining a raw material batch. Next, the obtained raw material batch is melted. The melting temperature is appropriately adjusted to make the raw material batch homogeneous. Specifically, the melting temperature is preferably 800°C or higher, more preferably 900°C or higher, and particularly preferably 1000°C or higher. The upper limit of the melting temperature is not particularly limited. However, because an excessively high melting temperature leads to evaporation of the sodium component or energy loss, the upper limit thereof is preferably not higher than 1500°C and particularly preferably not higher than 1400°C.

When a phosphate, such as sodium metaphosphate (NaPO₃) or sodium tertiary phosphate (Na₃PO₄), is used as a starting material of P, a positive-electrode active material containing less devitrified foreign matter and having excellent homogeneity can be easily obtained. With the use of this positive-electrode active material as a positive-electrode material, a secondary battery having a stable discharge capacity can be easily obtained.

The resultant melt is cooled and formed into a shape, thus obtaining a precursor glass (a positive-electrode active material precursor glass for a sodium-ion secondary battery). The method for forming the melt into a shape is not particularly limited and, for example, the melt may be formed into a film with rapid cooling by pouring the melt between a pair of cooling rolls or may be formed into an ingot by casting the melt into a mold. The precursor glass is preferably a fully amorphous body from the viewpoint of homogeneity, but may partially contain a crystalline phase.

The composition of the precursor glass, like the above-described composition of the crystallized glass, preferably contains, in terms of % by mole of the following oxides, 8 to 55% Na₂O, 1 to 70% NiO, over 0 to 60% CoO+MnO+CrO+FeO+TiO₂ (where at least two selected from among CoO, MnO, CrO, FeO, and TiO₂ are contained), and 15 to 70% P₂O₅. The reasons why the components are limited as above, the preferred ranges of contents of the components, the other possible components are the same as those for the above-described crystallized glass and the description thereof will therefore be omitted.

A positive-electrode active material according to the present invention can be obtained by firing the glass body obtained in the above manner to thereby crystallize it.

The firing temperature for crystallization is preferably equal to or higher than the glass transition temperature and more preferably equal to or higher than the crystallization temperature. The glass transition temperature and the crystallization temperature can be determined from DSC (differential scanning calorimetry) or DTA (differential thermal analysis). If the firing temperature is too low, the precipitation of the crystalline phase tends to be insufficient. On the other hand, if the firing temperature is too high, the glass body particles are fusion bonded together to decrease the specific surface area and, therefore, the discharge capacity of the positive-electrode active material tends to decrease. Hence, the firing temperature is preferably 900°C or lower, more preferably 850°C or lower, even more preferably 800°C or lower, and particularly preferably 750°C or lower.

The firing time is appropriately adjusted to sufficiently promote the crystallization of the glass body. Specifically, the firing time is preferably 20 to 300 minutes and more preferably 30 to 240 minutes.

For the above firing, an electric heating furnace, a rotary kiln, a microwave heating furnace, a high-frequency heating furnace, or other furnaces can be used. The reduction of transition metal ions and crystallization of the glass body may be concurrently performed.

Furthermore, if necessary, the glass body may be mixed with an electrically conductive carbon while they are ground, and, thus, the positive-electrode active material may be given electrical conductivity. An example of a method for mixing them with grinding is a method in which a general grinder is used, such as a mortar, a mortar mixer, a ball mill, an attritor, a vibrating ball mill, a satellite ball mill, a planetary ball mill, a jet mill or a bead mill. Among them, a planetary ball mill is preferably used. The planetary ball mill has a structure in which a disk rotates while pots thereon rotate, and thus can efficiently produce very high impact energy. Therefore, the electrically conductive carbon can be dispersed homogeneously into the glass body to increase the electronic conductivity.

Moreover, as described previously, the glass body may be coated with an electrically conductive carbon by mixing the glass body with an organic compound which is a source of the electrically conductive carbon and then firing the mixture in an inert or reducing atmosphere to carbonize the organic compound. This firing may be conducted concurrently with a heat treatment process for reducing transition metal ions or a heat treatment process for crystallizing the glass body.

Note that a positive-electrode active material obtained by the solid reaction process generally contains no amorphous phase and is therefore less likely to enjoy the previously described effects of the present invention that would be obtained if it contained an amorphous phase.

### (Positive-Electrode Material for Sodium-Ion Secondary Battery)

A positive-electrode material for a sodium-ion secondary battery can be obtained by mixing the positive-electrode active material for a sodium-ion secondary battery according to the present invention with a conductive agent, a binder, and so on.

Examples of the conductive agent include powdered or fibrous electrically conductive carbons, including highly electrically conductive carbon blacks, such as acetylene black and Ketjen black, and graphite. Among them, acetylene black is preferred because it can increase the electrical conductivity even when added in small amount.

The binder is a component to be added to a positive-electrode active material for the purpose of binding together materials forming a positive-electrode material and preventing the positive-electrode active material from shedding from the positive electrode due to a volume change accompanying charge and discharge. Specific examples of the binder include thermoplastic straight-chain polymers, such as polytetrafluoroethylene (PTFE), poly(vinylidene fluoride) (PVDF), fluorine-containing rubbers, and styrene-butadiene rubber (SBR); thermosetting resins, such as thermosetting polyimide, polyamide-imide, polyamide, polypropylene carbonate, phenolic resin, epoxy resin, urea resin, melamine resin, unsaturated polyester resin, and polyurethane; cellulose derivatives, such as carboxymethyl cellulose (including salts of carboxymethyl cellulose, such as sodium carboxymethyl cellulose, the same applies hereafter), hydroxypropylmethyl cellulose, hydroxypropyl cellulose, hydroxyethyl cellulose, ethyl cellulose, and hydroxymethyl cellulose; and water-soluble polymers, such as polyvinyl alcohol, polyacrylamide, polyvinyl pyrrolidone, and their copolymers. Among them, thermosetting resins, cellulose derivatives, and water-soluble polymers are preferred because of their excellent binding properties and thermosetting polyimide or carboxymethyl cellulose is more preferred because of their industrially widespread use. Particularly, carboxymethyl cellulose is most preferred because it is inexpensive and has such low environmental burden that it does not need any organic solvent in preparing a paste for electrode formation. These binders may be used singly or in a mixture of two or more of them.

In using the positive-electrode active material for a sodium-ion secondary battery according to the present invention as a solid-state sodium-ion secondary battery, a sodium ion-conductive solid electrolyte is preferably added as a component of the positive-electrode material for a sodium-ion secondary battery. The sodium ion-conductive solid electrolyte is a component that plays a role in conducting sodium ions between a positive electrode and a negative electrode in an all-solid-state power storage device. The sodium ion-conductive solid electrolyte is preferably a beta-alumina-based solid electrolyte or a NASICON-type solid electrolyte because they have excellent sodium-ion conductivity. Beta-alumina includes two types of crystals: β-alumina (theoretical composition formula: Na₂O·11Al₂O₃) and β"-alumina (theoretical composition formula: Na₂O·5.3Al₂O₃). β"-alumina is a metastable material and is therefore generally used in a state in which Li₂O or MgO is added as a stabilizing agent thereto. Because β"-alumina has a higher sodium-ion conductivity than β-alumina, β"-alumina alone or a mixture of β"-alumina and β-alumina is preferably used and Li₂O-stabilized β"-alumina (Na_{1.6}Li_{0.34}Al_{10.66}O₁₇) or MgO-stabilized β"-alumina ((Al_{10.32}Mg_{0.68}O₁₆) (Na_{1.68}O)) is more preferably used.

Examples of NASICON crystals include those containing at least one of a first compound represented by a general formula Na₁₊ₓZr₂P₃₋ₓSiₓO₁₂ (where 0 ≤ x ≤ 3) and a second compound in which a part of Zr in the first compound is substituted with at least one element selected from the group consisting of Ca, Mg, Ba, Sr, Al, Sc, Y, In, Ti, and Ga. Specifically, Na₃Zr₂PSi₂O₁₂, Na₃Zr_{1.6}Ti_{0.4}PSi₂O₁₂, Na₃Zr_{1.88}Y_{0.12}PSi₂O₁₂, and Na_{3.12}Zr_{1.88}Y_{0.12}PSi₂O₁₂ are preferred, and Na_{3.12}Zr_{1.88}Y_{0.12}PSi₂O₁₂ is particularly preferred because of its excellent sodium-ion conductivity.

The positive-electrode material for a sodium-ion secondary battery according to the present invention is used as a positive electrode for a sodium-ion secondary battery by applying the positive-electrode material onto a current collector formed of a metal foil, such as aluminum, copper or gold, and drying it. Alternatively, it is possible to form the positive-electrode material for a sodium-ion secondary battery according to the present invention into a sheet shape and then form thereon a current collector formed of a metal coating by sputtering, vapor deposition, plating or other processes.

### (Sodium-Ion Secondary Battery)

A sodium-ion secondary battery according to the present invention includes, in addition to the above positive electrode for a sodium-ion secondary battery, a negative electrode as a counter electrode and an electrolyte.

The negative electrode contains a negative-electrode active material capable of absorbing and releasing sodium ions during charge and discharge. Examples of the negative-electrode active material that can be used include metallic materials, such as metallic Na, metallic Sn, metallic Bi, metallic Zn, Sn-Cu alloy, and Bi-Cu alloy, carbon materials, such as hard carbon, and oxide materials containing Ti and/or Nb as an element.

Electrolytes that can be used include an aqueous electrolyte, a nonaqueous electrolyte, and a solid electrolyte. Solid electrolytes or, among nonaqueous electrolytes, electrolytes containing an ionic liquid or concentrated electrolyte solutions with a high salt concentration have wide potential windows, therefore produce little gas due to electrolyte decomposition during charge and discharge, and thus can increase the safety of the sodium-ion secondary battery. Among them, solid electrolytes are preferred because of their non-flammability. Solid electrolytes that can be used are as described previously. Solid electrolytes have wider potential windows as compared to aqueous and nonaqueous electrolytes, therefore produce little gas due to decomposition, and thus can increase the safety of the sodium-ion secondary battery.

### [Example]

Hereinafter, the present invention will be described in detail with reference to examples, but the present invention is not at all limited to the following examples.

Tables 1 to 4 show Examples 1 to 17 of the present invention and Comparative Examples 1 to 3.

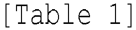

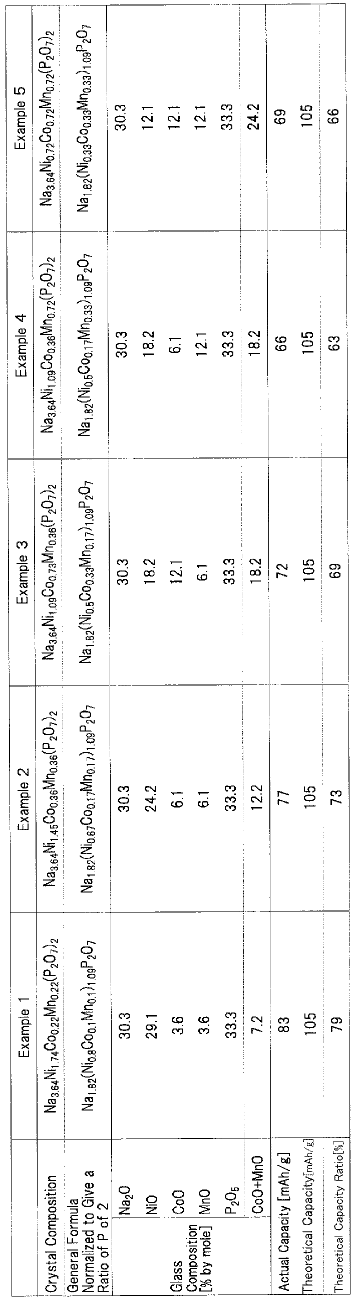

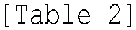

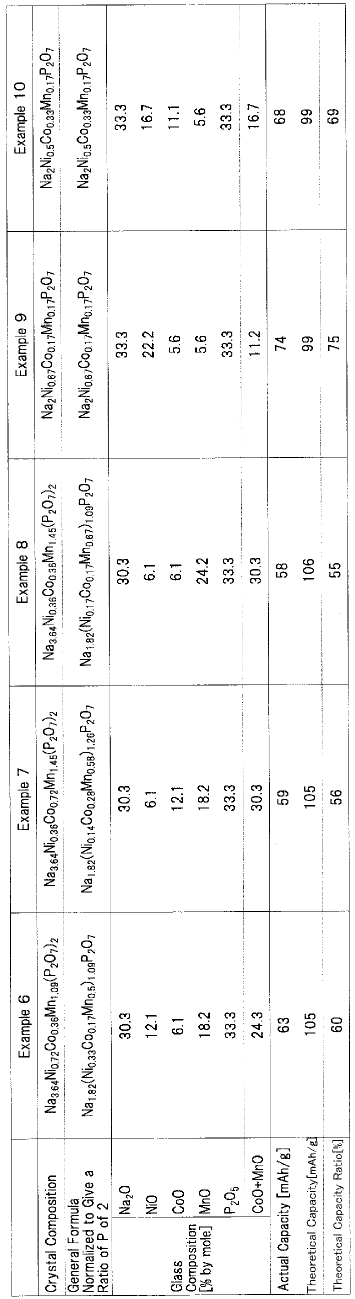

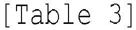

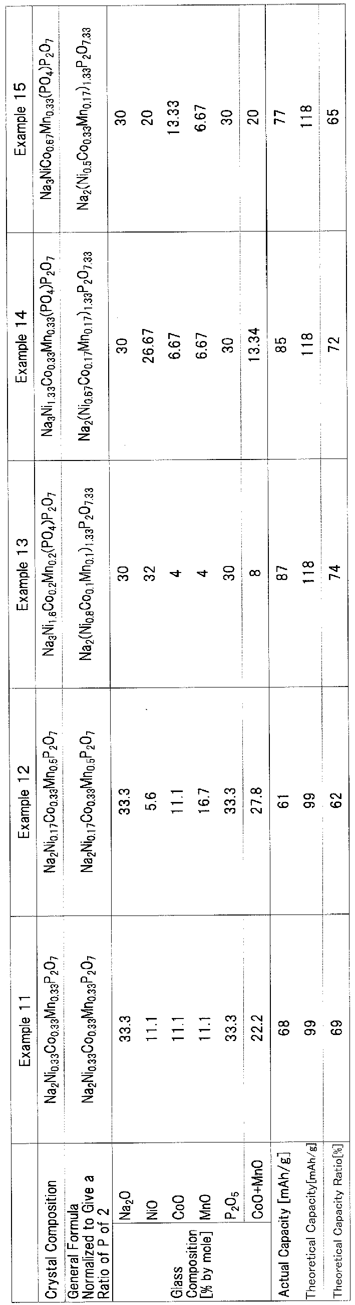

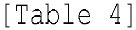

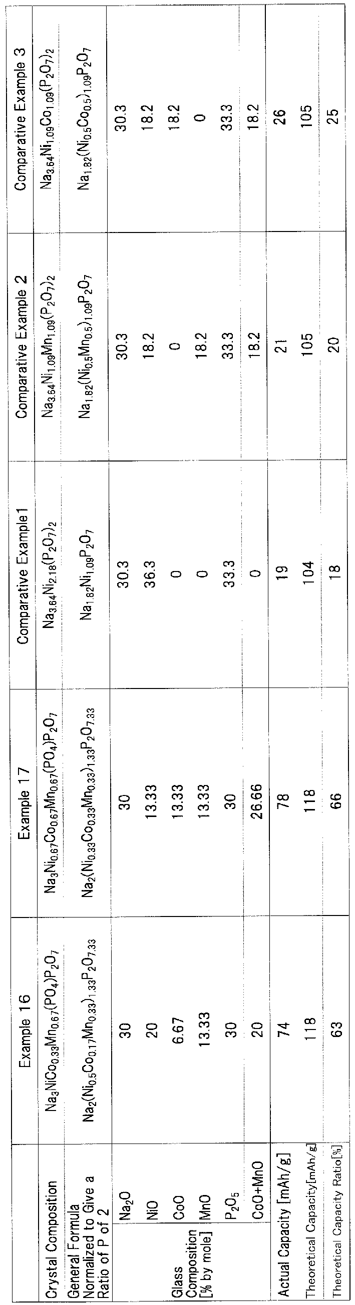

### (1) Making of Positive-Electrode Active Material Precursor Powder

Using sodium metaphosphate (NaPO₃), sodium carbonate (Na₂CO₃), orthophosphoric acid (H₃PO₄), nickel oxide (NiO), cobalt oxide (II) (CoO), and manganese dioxide as raw materials, powders of these raw materials were formulated to give each composition described in the tables and melted at 1250°C for 45 minutes in an air atmosphere. Thereafter, the resultant molten glass was poured between a pair of rotating rollers and formed into a shape with rapid cooling, thus obtaining a film-like glass body having a thickness of 0.1 to 1 mm. The film-like glass body was ground for 10 hours in a ball mill using 20-mm diameter ZrO₂ balls and the ground product was passed through a resin-made sieve with 120-µm openings, thus obtaining a coarse glass powder having an average particle diameter of 7 µm. The coarse glass powder was further ground, using ethanol as a griding aid, for 80 hours in a ball mill using 3-mm diameter ZrO₂ balls, thus obtaining a glass powder (a positive-electrode active material precursor powder) having an average particle diameter of 0.6 µm. As a result of XRD measurement, the glass powder was confirmed to be amorphous.

### (2) Preparation of Sodium-Ion Conductive Solid Electrolyte

### (Li₂O-Stabilized β"-Alumina)

A green sheet (0.25 mm thick) containing Li₂O-stabilized β" alumina having a composition formula Na_{1.6}Li_{0.34}Al_{10.66}O₁₇ was made and fired at 1600°C for 30 minutes, thus obtaining a solid electrolyte sheet having a thickness of 0.2 mm. Separately, another solid electrolyte sheet thus obtained was ground with a planetary ball mill and the ground product was passed through a sieve with 10-µm openings, thus preparing a solid electrolyte powder (having an average particle diameter of 2 µm).

### (3) Production of Solid-State Sodium-Ion Secondary Cell

The positive-electrode active material precursor powder, the solid electrolyte powder, both of which were obtained as above, and acetylene black (Super C65 manufactured by Timcal) as a conductive agent were weighed in a mass ratio of 83:13:4 and mixed for 30 minutes in an agate mortar. An amount of 15 parts by mass of polypropylene carbonate was added to 100 parts by mass of the obtained mixed powder and 70 parts by mass of N-methyl-2-pyrrolidinone was further added to the mixture, followed by well stirring with a planetary centrifugal mixer, thus obtaining a slurry.

The obtained slurry was applied, with an area of 1 cm² and a thickness of 70 µm, to one side of the above-described solid electrolyte sheet and then dried at 70°C for three hours. Next, the product was put into a carbon container and fired therein at 500 to 650°C in an inert atmosphere, specifically, in a N₂ (99.999% by volume) atmosphere, to crystallize the positive-electrode active material precursor powder, thus forming a positive electrode layer. All the above operations were performed in an environment with a dew point of -50°C or lower. The materials making up the positive electrode layer were subjected to powder X-ray diffraction measurement to identify the crystal structure.

Next, a current collector formed of a 300-nm thick gold electrode was formed on the surface of the positive electrode layer using a sputtering device (SC-701AT manufactured by Sanyu Electron Co., Ltd.). Furthermore, in an argon atmosphere with a dew point of -70°C or lower, metallic sodium serving as a counter electrode was pressure-bonded to the surface of the solid electrolyte layer located on the side opposite to the surface where the positive electrode layer was formed. The obtained laminate was placed on a lower lid of a coin cell and covered with an upper lid, thus producing a CR2032-type test cell.

### (4) Charge and Discharge Test

Each of the produced test cells was CC (constant-current) charged at 60°C from an open circuit voltage to 5.3 V and its amount of electricity charged to the positive-electrode active material per unit mass (first charge capacity) was determined. Next, the test cell was CC discharged from 5.3 V to 2 V and its amount of electricity discharged from the positive-electrode active material per unit mass (first discharge capacity) was determined. In this test, the current value during charge and discharge was set at a C-rate of 0.02 C with respect to the theoretical capacity of the active material. The results are shown as "Actual Capacity" in Tables 1 to 4. The tables show the theoretical capacity of each of the crystals and the ratio of the actual capacity to the theoretical capacity as "Theoretical Capacity Ratio".

As is obvious from Tables 1 to 4, the theoretical capacity ratio in Examples 1 to 17 was 55% or more, whereas the theoretical capacity ratio in Comparative Examples 1 to 3 was as low as 25% or less.

### [Industrial Applicability]

The positive-electrode active material for a sodium-ion secondary battery according to the present invention is suitable for sodium-ion secondary batteries for use in portable electronic devices, electric vehicles, electric power tools, backup emergency power supplies, and so on.

## Claims

1. A positive-electrode active material for a sodium-ion secondary battery, the positive-electrode active material being made of a crystallized glass containing crystals represented by a general formula Naₓ(Ni_{1-a-b}MₐM'_{b})_{y}P₂O_{z} (where M and M' are transition metal elements different from each other and each at least one transition metal element selected from the group consisting of Co, Mn, Cr, Fe, and Ti, and 0.6 ≤ x ≤ 4, 0.3 ≤ y ≤ 2.7, 6 ≤ z ≤ 7.5, 0 < a ≤ 0.9, and 0 < b ≤ 0.9 are satisfied) .

2. The positive-electrode active material for a sodium-ion secondary battery according to claim 1, wherein each of M and M' is Co or Mn.

3. The positive-electrode active material for a sodium-ion secondary battery according to claim 1 or 2, the positive-electrode active material being made of a crystallized glass containing crystals represented by a general formula Na₂Ni_{1-a-b}MₐM'_{b}P₂O₇, a general formula Na_{1.82}(Ni_{1-a-b}MₐM'_{b})_{1.09}P₂O₇ or a general formula Na₂(Ni_{1-a-b}MₐM'_{b})_{1.33}P₂O_{7.33} (where M and M' each independently represent at least one transition metal element selected from the group consisting of Co, Mn, Cr, Fe, and Ti, and 0 < a ≤ 0.9 and 0 < b ≤ 0.9 are satisfied).

4. The positive-electrode active material for a sodium-ion secondary battery according to claim 1 or 2, wherein the crystals have a structure belonging to a triclinic space group P1 or P-1.

5. The positive-electrode active material for a sodium-ion secondary battery according to claim 1 or 2, wherein the crystallized glass contains, in terms of % by mole of the following oxides, 8 to 55% Na₂O, 1 to 70% NiO, over 0 to 60% CoO+MnO+CrO+FeO+TiO₂ (where at least two selected from among CoO, MnO, CrO, FeO, and TiO₂ are contained), and 15 to 70% P₂O₅.

6. The positive-electrode active material for a sodium-ion secondary battery according to claim 5, wherein the positive-electrode active material contains, in terms of % by mole, 0 to 10% Al₂O₃+ZrO₂.

7. The positive-electrode active material for a sodium-ion secondary battery according to claim 5, wherein the positive-electrode active material contains, in terms of % by mole, 0 to 10% F.

8. A positive-electrode active material precursor glass for a sodium-ion secondary battery, the positive-electrode active material precursor glass containing, in terms of % by mole of the following oxides, 8 to 55% Na₂O, 1 to 70% NiO, over 0 to 60% CoO+MnO+CrO+FeO+TiO₂ (where at least two selected from among CoO, MnO, CrO, FeO, and TiO₂ are contained), and 15 to 70% P₂O₅.

9. An electrode for a sodium-ion secondary battery, the electrode containing the positive-electrode active material for a sodium-ion secondary battery according to claim 1 or 2, a solid electrolyte, and a conductive agent.

10. The electrode for a sodium-ion secondary battery according to claim 9, wherein the solid electrolyte is a beta-alumina-based solid electrolyte.

11. The electrode for a sodium-ion secondary battery according to claim 9, wherein the solid electrolyte is a NASICON-type solid electrolyte containing at least one of a first compound represented by a general formula Na₁₊ₓZr₂P₃₋ₓSiₓO₁₂ (where 0 ≤ x ≤ 3) and a second compound in which a part of Zr in the first compound is substituted with at least one element selected from the group consisting of Ca, Mg, Ba, Sr, Al, Sc, Y, In, Ti, and Ga.

12. A sodium-ion secondary battery comprising the electrode for a sodium-ion secondary battery according to claim 9.
